# EUROPEAN PATENT APPLICATION

(11) **EP 4 751 798 A1**
(43) Date of publication of application: **03.06.2026**
(21) Application number: 24216111.5
(22) Date of filing: 28.11.2024
(51) Int. Cl.: B01D 61/18, B01D 63/02

(54) **FILTER MODULE, SYSTEM, PREFERABLY FOR USE IN A PHARMACEUTICAL PROCESS, AND METHOD**

(71) Applicant: Sartorius Stedim Biotech GmbH, 37079 Göttingen (DE)
(72) Inventor: HELLING, Dr. Alexander, 37079 Göttingen (DE); WORTMEYER, Johannes, 37079 Göttingen (DE); FROBÖSE, Franziska, 37079 Göttingen (DE); FÜGER, Marcel, 37079 Göttingen (DE); DEUSE, Mario, 37079 Göttingen (DE)
(74) Representative: Cohausz & Florack

(57) **Abstract**

Depicted and described is a Filter module (1) for the tangential flow filtration of a feed medium, comprising: a, preferably cassette-shaped, housing (2), one or more hollow fibers (8) for separating a feed medium into a retentate and a permeate, wherein the housing (2) has one or more transverse extension axes (TEA) and/or one or more longitudinal extension axes (LEA), wherein one or more conduits (9) are arranged in the housing (2), wherein the one or more hollow fibers (8) are arranged in the one or more conduits (9). In order to provide a filter module (1) which allows for the use of hollow fibers (8) with a set, preferably standardized, length while allowing for an individual arrangement of inlets and outlets of the filter module (1) it is proposed that the one or more hollow fibers (8) are at least in sections bent around the one or more transverse extension axes (TEA) and/or the one or more hollow fibers (8) are at least in sections bent around the one or more longitudinal extension axes (LEA).

## Description

The present invention relates to a filter module for the tangential flow filtration of a feed medium, comprising: a, preferably cassette-shaped, housing, one or more hollow fibers for separating a feed medium into a retentate and a permeate, wherein the housing has one or more transverse extension axes and/or one or more longitudinal extension axes, wherein one or more conduits are arranged in the housing, wherein the one or more hollow fibers are arranged in the one or more conduits.

The present invention further relates to a system, preferably for use in a pharmaceutical process, comprising one or more filter modules, a device, preferably for use in a pharmaceutical process, wherein, preferably, the one or more filter modules are connected to the device via a respective fluidic connection.

The present invention further relates to a method for operating one or more filter modules comprising the following steps: a) Providing one or more filter modules according to one of claims 1 to 12 and a device, preferably providing a system according to one of claims 13 to 16, b) Connecting the one or more filter modules to the device, c) Separating a feed medium into a retentate and a permeate with the one or more filter modules, and d) Preferably, disconnecting the on one or more filter modules from the device.

Conventional filter modules, in particular for tangential flow filtration (TFF), comprise a conduit in the form of a longitudinal and predominantly straight tube provided in a housing, wherein hollow fibers are arranged in this conduit. The hollow fibers usually are connected, in particular glued or potted, to the inlet and outlet of the conduit to hold the hollow fibers in place. As a result, in particular due to the predominantly straight tube, either the hollow fibers have to be designed to have a certain length or effective filtration area, which is often individual for each type of filter module, in order to be able to arrange the inlet and outlet at a desired position of the housing or the inlet and outlet have to be arranged at a certain position of the housing in order to accommodate hollow fibers with a set, preferably standardized, length or effective filtration area.

The first option allows for a very individual design of the filter module, in particular it allows for a customized arrangement of the inlet and outlet to match the position of inlets and outlets of devices, for example pharmaceutical devices, using such filter modules. Moreover, this can allow for a customized design of the housing of the filter module so that the filter module can be accommodated fittingly in a filter module receptacle of the device using the filter module. In this way no additional extension tubes or special adapters are needed to connect the inlets and outlets of the filter module with the inlets and outlets of the device. However, using hollow fibers with individual lengths or effective filtration areas for each type of filter module complicates the production, especially the mass production, of the hollow fibers and thus also of the filter modules, which in turn will increase the costs of the filter module for end user.

The second option on the other hand allows for the use of hollow fibers with set, preferably standardized lengths or effective filtration areas, which simplifies the production of the filter modules. However, this can result in the position of the inlets and outlets of the filter module and the position of the inlets and outlets of the device, with which the filter module is intended to be used, not matching. Alternatively or in addition, the housing of the filter module has to be designed in a way not matching the design of a respective filter module receptacle of the device intended for using the filter module in order to be able to accommodate the hollow fibers in the filter module. As a result, additional extension tubes or special adapters are needed to connect the filter module and the device leading to inappropriate increased hold-up volume. Especially, if only the batch of liquid medium to be filtered is rather small, such increased hold-up volume would result in a drastic reduction of final yield.

Moreover, for users of such filter modules, in particular biopharma manufacturers, it is advantageous if they can use the same type of hollow fiber, preferably with the same standardized length or effective filtration area, for large scale production, process and product development as well as small scale processes. Thus, the same hollow fibers can be used in all areas of application, which improves the transferability of process settings and process results between these areas of application.

Against this background, it is an object of the present invention to provide a filter module which allows for the use of hollow fibers with a set, preferably standardized, length or effective filtration area while allowing for an individual arrangement of inlets and outlets of the filter module, and thereby an improved and simplified connectability to the respective filter module receptacle of the process device may be achieved.

The object named above is solved in accordance with the present invention in that the one or more hollow fibers are at least in sections bent around the one or more transverse extension axes and/or the one or more hollow fibers are at least in sections bent around the one or more longitudinal extension axes.

Moreover, it is an object of the present invention to provide a system comprising a filter module using hollow fibers with a set, preferably standardized, length or effective filtration area without the need to use extension tubes or special adapters to connect the filter module to a device interacting with the filter module.

The object named above is further solved in accordance with the present invention in that the one or more filter modules are one or more filter modules according to one of claims 1 to 12.

Moreover, it is an object of the present invention to provide a method for operating one or more filter modules using hollow fibers with a set, preferably standardized, length or effective filtration area without the need to use extension tubes or special adapters to connect the filter module to a device interacting with the filter module.

The object named above is further solved in accordance with the present invention by the method of claim 17.

Various embodiments of the filter module and the system are described in the following. The individual embodiments are in each case individually applicable to the filter module and the system. The individual embodiments may furthermore be combined with each other at will.

The filter module for the tangential flow filtration of a feed medium, comprises: a, preferably cassette-shaped, housing. The housing can have at least in sections a rectangular shape, which simplifies handling, in particular transporting and/or usage with common devices using the filter module. The filter module can have a length of at least 10 mm, preferably at least 25 mm, more preferably at least 50 mm, in particular at least 100 mm and/or at most 500 mm, preferably at most 250 mm, more preferably at most 150 mm, in particular at most 125 mm. The filter module can have a width of at least 10 mm, preferably at least 25 mm, more preferably at least 40 mm, in particular at least 100 mm and/or at most 500 mm, preferably at most 250 mm, more preferably at most 150 mm, in particular at most 70 mm. The filter module can have a thickness of at least 10 mm, preferably at least 15 mm, more preferably at least 20 mm, in particular at least 50 mm and/or at most 250 mm, preferably at most 150 mm, more preferably at most 100 mm, in particular at most 40 mm. For example the filter module can have a length of 100 mm, a width of 40 mm and a thickness of 20 mm. It can be provided that the length of the housing and/or the greatest extension of the housing is a multiple of the width of the housing and/or a multiple of the thickness of the housing. Alternatively or in addition the width of the housing is preferably a multiple of the thickness of the housing. The housing, preferably at least one outer surface of the housing, can have at least in sections a structure of struts, preferably honeycomb-like or triangle-like struts, which improves the rigidity of the housing. It can in particular be provided that at least two, preferably opposing, outer surfaces of the housing can have at least in sections a structure of struts, preferably honeycomb-like or triangle-like struts, further improving the rigidity of the housing. It can be provided that the housing comprises at least two housing parts, wherein, preferably, the two housing parts accommodate the one or more conduits and/or the one or more hollow fibers. The two housing parts can be connected together, preferably by bonding, in particular adhesive bonding and/or thermal bonding, by force-fitting connection and/or by form-fitting connection. The housing can be made at least in sections of acrylonitrile butadiene styrene (ABS), polypropylene (PP), polyethylene (PE), polybutylene terephthalate (PBT), Polyethylene terephthalate (PET) and/or other polyolefins. Alternatively or in addition the housing can be made at least in sections from reinforced, preferably fiber-reinforced, acrylonitrile butadiene styrene (ABS), polypropylene (PP), polyethylene (PE), polybutylene terephthalate (PBT), Polyethylene terephthalate (PET) and/or other polyolefins.. The housing can be manufactured at least in sections by molding, additive manufacturing, 3D-printing and/or machining.

The filter module, preferably the housing of the filter module, can comprise one or more alignment elements for aligning and/or guiding the filter module with respect to a device when connecting the filter module to the device, preferably when inserting the filter module in one or more filter module receptacles of the device. The device is preferably a device as explained further below in connection with the disclosed system. The one or more alignment elements simplify connecting the filter module to the device in the intended orientation and/or without wedging.

In addition, the filter module comprises one or more hollow fibers for separating a feed medium into a retentate and a permeate. The one or more hollow fibers respectively comprise an inner hollow section, also called lumen, for feeding a medium through the hollow fiber. The one or more hollow fibers preferably respectively act as a membrane, have respectively a sidewall permeable to fluids, in particular liquids, and/or have respectively a plurality of pores, preferably in the respective sidewall of the one or more hollow fibers, having a pore size of at least 0.01 µm, preferably at least 0.1 µm, more preferred at least 0.45 µm, in particular at least 1 µm and/or at most 100 µm, preferably at most 10 µm, in particular at most 1 µm. Further, there are various categories of membrane, depending on the average pore size: microfiltration and ultrafiltration. Microfiltration membranes have pores ranging from approximately 0.1 µm to 100 µm, while an ultrafiltration membrane has pores ranging from approximately 1 nm to 0.1 µm. Such a membrane may also be expressed by its ability to fractionate proteins, nucleic acids and other polymers by size. For example, an ultra-filtration membrane may have a molecular weight cutoff (MWCO) range from 1,000 to 1,000,000 Daltons, pertaining to the approximate molecular weight of the polymer retained by the ultra-filtration membrane. Such pore dimension allows for a satisfactory filtering, in particular a satisfactory separating of feed medium into retentate and permeate. The number of the one or more hollow fibers can range between 1 and 1000 hollow fibers, preferably between 1 and 500 hollow fibers, more preferably between 1 and 100 hollow fibers, further preferably between 1 and 50 hollow fibers, in particular between 1 and 10 hollow fibers. The one or more hollow fibers can have at least in sections a round, a circular, an oval and/or an elliptical outer diameter and/or at least in sections a round, a circular, an oval and/or an elliptical inner diameter. The inner diameters of the hollow fibers may be of any size, and no size limitation is intended. Notwithstanding, it is frequently convenient to select from among commercially available options. Small sized fibers provide higher surface to volume ratios at the possible expense of higher shear rates, increased pressure drops, which, in turn, may affect pump selection and the ability to effect filtration, and slower axial velocity, depending on the fluid viscosity, solids load, and propensity to form gel layers. Fibers having higher inner diameters may allow for faster axial velocity at lower surface to volume ratios. Inner diameters of the one or more hollow fibers may range from about 0.1 mm to about 3.0 mm. Within this range, the one or more hollow fibers may have inner diameters between about 0.5 mm to about 2.0 mm. In particular, inner diameters may be selected from about 0.5 mm, about 0.63 mm, about 0.7 mm, about 0.75 mm, about 1.0 mm, about 1.4 mm, or about 1.9 mm. This provides hollow fibers with a large usable area for medium separation, while preferably also providing sufficient dimensional stability for the hollow fibers. In this context it can be preferable if the filter module, preferably the housing, the one or more conduits/and or the one or more hollow fibers, is designed to withstand a pressure of at least 0.001 bar, preferably at least 0.1 bar, more preferably at least 1 bar, in particular at least 2 bar or at least 5 bar and/or at most 10 bar, preferably at most 7,5 bar, in particular at most 5 bar, wherein, preferably, the pressure is intended to be caused by medium flowing in the one or more conduits and/or in the one or more hollow fibers. Suitable materials for constructing the one or more hollow fibers at least in section may include, without limitation, hydrophobic materials, hydrophilic materials and/or amphiphilic materials. In addition, some materials, such as polyamides may display bulk hydrophilic properties and surface hydrophobic properties. Without intending to be bound by theory, the degree of hydrophobicity or hydrophilicity may permit wicking of the carrying solvent through the pores of the filter membrane; thus influencing selectivity, and/or non-specific or amphiphilic binding of the molecules to the membrane. Hydrophobic materials of construction include, without limitation, polysulfone, polyethersulfone, polypropylene, polyethylene, polyvinylidene fluoride, hydrophobic poly tetrafluoroethylene (PTFE), hydrophobic polyamides and/or the like. Hydrophilic materials of construction include, without limitation, polylactic acid, analogous polymerized hydroxy acids, cellulose acetate, mixed cellulose esters, hydrophilic polyamides, and/or the like. The monomer repeat units of the foregoing polymers may be used in copolymers to adjust polymer physical properties, and to obtain the desired levels of hydrophobicity and hydrophilicity. Such amphiphilic materials may provide the opportunity for greater selectivity. In addition, amphiphilic materials may provide self-organizing properties. The one or more hollow fibers can respectively have a length between about 5 inches and 50 inches, preferably selected from about 12 inches, about 24 inches and/or about 41 inches. Longer filtration paths may be obtained by arranging two or more filter modules such that the retentate section and/or retentate outlet of one filter module is fluidly coupled to infeed section and/or infeed inlet of another filter module downstream. In this way, longer filtration paths can be achieved using readily available filter components.

An effective filtration area can be defined as the total area of the filter media that is exposed to the flow of feed, that is usable for filtration. This is often designated in square centimetres (cm²), square inches (in²) or square feet (ft²). Such filter membrane surface area available for filtration in the filter module (=effective filtration area) can be calculated by multiplying the effective surface area of each fiber by the number of fibers sealed in the filter module housing.

In addition, it is provided that the housing has one or more transverse extension axes and/or one or more longitudinal extension axes. The one or more transverse extension axes can be spaced apart from each other, preferably along a common plane and/or along one of the one or more longitudinal extension axes, and/or the one or more longitudinal extension axes can be spaced apart from each other, preferably along a common plane and/or along one of the one or more transverse extension axes.

In addition, it is provided that the one or more conduits are arranged in the housing. The one or more conduits can be formed at least in sections in the housing, preferably as one or more recesses of the housing, and/or the one or more conduits can be attached at least in sections to the housing.

In addition, it is provided that the one or more hollow fibers are arranged in the one or more conduits. The one or more hollow fibers can thus at least in sections act as a retentate section for accommodating retentate and the one or more conduits can act at least in sections as a permeate section for accommodating permeate or vice versa. The inner diameter of the one or more conduits can at least in sections be bigger than the outer diameter of the one or more hollow fibers, preferably the respectively adjoining section of the one or more hollow fibers.

In addition, it is provided that the one or more hollow fibers are at least in sections bent around the one or more transverse extension axes and/or the one or more hollow fibers are at least in sections bent around the one or more longitudinal extension axes. By respectively bending the hollow fibers, hollow fibers with a set, perhaps even standardized, length or effective filtration area can be accommodated in the housing, preferably by arranging the one or more hollow fibers in at least a partial loop, without the need to change the design of the housing, the inlets and/or outlets. This can also be helpful for arranging hollow fibers within the housing, wherein the hollow fibers have a length longer than the length of the housing, however, which hollow fibers do not have a set, in particular standardized, length. Moreover, this also simplifies providing, in particular longer, hollow fibers in a filter module with a set design of the housing, inlets and/or outlets. Furthermore, by bending the hollow fibers fouling of the hollow fibers and/or sedimentation in the hollow fibers can be reduced as fouling buildup or sedimentation can more easily be removed by the flowing medium in the bent sections. Bending the one or more hollow fibers around the transverse extension axes further simplifies providing a larger bending radius, thus reducing shear forces on the medium filtered, and at the same time a housing with a rather low thickness, even if the hollow fibers are bent in multiple loops. The one or more hollow fibers can be bend at least in sections in a continuous bent section spanning at least 30°, preferably at least 60°, more preferably at least 90°, further preferably at least 120°, further preferred at least 150° or at least 180°, in particular at least 360°.

In addition, it can also be provided that the filter module is combined with one or more add-on filter modules. The one or more add-on filter modules can comprise one or more filter modules as described throughout this disclosure, preferably one or more of the one or more add-on filter modules is identical to the filter module. Alternatively or in addition the one or more add-on filter modules can comprise one or more add-on filter modules different from the filter module and/or can comprise one or more add-on filter modules comprising at least one membrane filter, at least one depth filter and/or at least one dead-end filter. Alternatively or in addition the one or more add-on filter modules can be integrated in the filter module, can be stacked with the filter module and/or can be connected to the filter module. The connection can be realized by pressing the filter module and the one or more add-on filter modules to each other, preferably by means of a common filter module holder. When add-on filter modules are integrated in the filter module, the integrated add-on filter modules can be arranged within the housing of the filter module. It is preferably also provided that the filter module and the one or more add-on filter modules are connected via a fluidic connection to each other.

In an embodiment of the filter module it is provided that the one or more longitudinal extension axes extend along the greatest extension of the housing and/or in that the one or more transverse extension axes extend obliquely, preferably perpendicularly, to the greatest extension of the housing and/or to the one or more longitudinal extension axes. The greatest extension of the housing preferably corresponds to the length of the housing. Alternative or in addition the greatest extension of the housing and/or the one or more longitudinal extension axes preferably extend parallel to the length of the housing. Alternative or in addition, the one or more transverse extension axes preferably extend parallel to the thickness or width of the housing.

In an embodiment of the filter module it is provided that the one or more conduits are at least in sections bent around the one or more transverse extension axes and/or the one or more conduits are at least in sections bent around the one or more longitudinal extension axes. By also bending the one or more conduits dead space can be reduced thus simplifying achieving the best possible flow of retentate and/or permeate. This can also reduce the risk of fouling or sedimentation. It can preferably be provided to bend the one or more hollow fibers and the one or more conduits at least in sections, preferably predominantly, corresponding to each other for further reducing dead space (hold-up volume).

In an embodiment of the filter module it is provided that the one or more hollow fibers and/or the one or more conduits are bent around the one or more transverse extension axes with at least one complete loop, preferably at least two complete loops, and/or in that the one or more hollow fibers and/or the one or more conduits are bent around the one or more longitudinal extension axes with at least one complete loop, preferably at least two complete loops. This simplifies providing rather long hollow fibers, preferably with a set length and/or a length multiple times longer than the length of the housing, in the housing. In this case it can be provided that the one or more hollow fibers of different loops are arranged at least in sections adjacent to each other, in particular in contact with each other, and/or at least in sections in the same conduit of the one or more conduits. This simplifies manufacturing of the filter module as not every loop of hollow fibers needs to be provided in a separate conduit.

In an embodiment of the filter module it is provided that the one or more hollow fibers and/or the one or more conduits are bent around at least two, preferably at least three, of the one or more transverse extension axes, preferably with at least one complete loop each, in particular with at least two complete loops each, and/or in that the one or more hollow fibers and/or the one or more conduits are bent around at least two, preferably at least three, of the one or more longitudinal extension axes, preferably with at least one complete loop each, in particular with at least two complete loops each. In this way it is simplified that the hollow fibers and/or conduits are bent over a larger portion of their respective length, in particular without having to increase the size of the housing, and preferably also with a changing curvature. This in turn further reduces the risk of fouling or sedimentation. It can preferably be provided that the curvature of the one or more hollow fibers and/or the curvature of the one or more conduits changes, preferably from a positive curvature to a negative curvature and/or from a negative curvature to a positive curvature, at least in sections between the at least two, preferably at least three, of the one or more transverse extension axes and/or the at least two, preferably at least three, of the one or more longitudinal extension axes. In this way loops with alternating curvature sections, for example in the shape of the number eight, can be provided. This simplifies providing multiple alternations of the flow direction thus further reducing the risk of fouling or sedimentation, as the flow can more easily remove fouling buildup or sedimentation.

In an embodiment of the filter module it is provided that the one or more hollow fibers and/or the one or more conduits are bent, preferably around the one or more transverse extension axes and/or the one or more longitudinal extension axes, with at least one, preferably at least two, in particular at least three, predominantly continuously curved loop, preferably substantially completely continuously curved loop. This further simplifies providing rather long hollow fibers, preferably with a set length and/or a length multiple times longer than the length of the housing, in the housing. Moreover, this preferably also helps reducing the risk of fouling or sedimentation.

In an embodiment of the filter module it is provided that the one or more hollow fibers and/or the one or more conduits are bent, preferably around the one or more transverse extension axes and/or the one or more longitudinal extension axes, with a bending radius of at most 125 mm, preferably at most 100 mm, in particular at most 75 mm, and/or of at least 0.5 mm, preferably at least 1 mm, in particular at least 5 mm. The minimum bending radius ensures that a sufficiently large bending radius is provided that keeps the shear forces on the medium filtered low, thus ensuring that the damage on the filtered medium, for example damage on proteins comprised in the medium, is kept low. On the other hand, the maximum bending radius ensures that the filter module stays sufficiently compact, simplifying handling of the filter module.

In an embodiment of the filter module it is provided that the one or more conduits form at least in sections, preferably substantially completely, a first conduit section with a first conduit length, a second conduit section with a second conduit length and/or a third conduit section with a third conduit length. In this way multiple loops of conduit and/or hollow fibers of different lengths can be provided in the filter module. For example, this allows the use of one and the same housing for hollow fibers of different length without the need to change the design of the housing, as multiple interconnected loops of conduit with different length are provided. In order to avoid dead space in this instance it can be provided that parts of the first conduit section, the second conduit section and/or the third conduit sections which are free from the one or more hollow fibers are filled at least in sections with a filling element.

In addition, it can be provided that the first conduit section, the second conduit section and/or the third conduit section bends at least in sections, preferably around the one or more transverse extension axes and/or the one or more longitudinal extension axes. Preferably the first conduit section, the second conduit section and/or the third conduit section bend around at least one common axes of the one or more transverse extension axes and/or of the one or more longitudinal extension axes.

Alternative or in addition it can be provided that the first conduit section, the second conduit section and/or the third conduit section forms at least one complete loop, preferably around the one or more transverse extension axes and/or the one or more longitudinal extension axes. This further helps to provide multiple loops of conduit and/or hollow fibers of different length in the same filter module. Preferably sections of the first conduit section, the second conduit section and/or the third conduit section form together at least one complete loop, preferably around the one or more transverse extension axes and/or the one or more longitudinal extension axes. For this not all parts of the first conduit section, the second conduit section and/or the third conduit section need to be involved in forming the respective loop.

Alternative or in addition it can be provided that the first conduit section forms at least in sections the second conduit section. Alternative or in addition the first conduit section and/or the second conduit section forms at least in sections the third conduit section. This further simplifies providing interconnected loops of conduit.

Alternative or in addition it can be provided that the first conduit length is shorter than the second conduit length and/or the third conduit length, the second conduit length is longer than the first conduit length and/or shorter than the third conduit length and/or the third conduit length is longer than the first conduit length and/or the second conduit length. This further simplifies providing multiple loops of conduit and/or hollow fibers of different length in the filter module, in particular housing.

Alternative or in addition it can be provided that the one or more hollow fibers are arranged at least in sections in the first conduit section, the second conduit section and/or the third conduit section. In this way the hollow fibers can be arranged in the conduit section which best match their length.

Alternative or in addition it can be provided that the first conduit section, the second conduit section and/or the third conduit section are connected to one another via a fluidic connection. This further simplifies providing interconnected loops of conduit.

In an embodiment of the filter module it is provided that the housing comprises one or more through holes extending through the housing, preferably from one side to another, in particular opposite, side of the housing, and in that, preferably, the one or more conduits are arranged at least in sections in the one or more through holes. In this way the weight of the filter module as well as the material need for the filter module can be reduced. This in turn simplifies handling, in particular transporting, of the filter module on the one hand and reduces manufacturing costs on the other hand.

In an embodiment of the filter module it is provided that the one or more conduits are formed at least in sections by one or more tubes and in that, preferably, the one or more tubes are arranged at least in sections in the one or more through holes. The one or more tubes are preferably considered as part of the housing. It can be provided that the one or more tubes are made from a different material then the rest of the housing and/or are connected, preferably bonded, to the rest of the housing. The provision of the one or more tubes further simplifies the manufacturing of the filter module as the rest of the housing, in particular with the trough holes, can be manufactured in one manufacturing step while the one or more tubes are manufactured in another manufacturing step and subsequently the one or more tubes are connected to the rest of the housing. Manufacturing the housing with through holes and the one or more conduits extending through the through holes in one piece would be hard to manufacture due to the complex geometry.

In an embodiment of the filter module it is provided that the one or more through holes form at least 5 %, preferably at least 15 %, in particular at least 25 %, and/or at most 95 %, preferably at most 85 %, in particular at most 75 %, of the volume of the filter module and/or the housing. In this way the weight of the filter module can be reduced while ensuring a sufficient stability of the filter module.

In an embodiment of the filter module it is provided that the filter module comprises an infeed section for feeding the feed medium to be filtered into the filter module, a retentate section for accommodating the retentate and/or a permeate section for accommodating the permeate. This simplifies the use of the filter module for tangential flow filtration. It can be provided that the retentate section extends at least in sections, preferably predominantly, along the one or more conduits and/or the one or more hollow fibers. Alternative or in addition, the permeate section extends at least in sections, preferably predominantly, along the one or more conduits and/or the one or more hollow fibers.

In addition, it can be provided that the retentate section and/or the permeate section is at least in sections delimited by the one or more conduits and/or the one or more hollow fibers, preferably formed between the one or more conduits and the one or more hollow fibers. The area between the one or more conduits and the one or more hollow fibers thus preferably forms the retentate section or the permeate section.

Alternative or in addition it can be provided that the retentate section and/or the permeate section is least in sections delimited by the one or more hollow fibers, preferably formed within the one or more hollow fibers. The inner hollow section of the one or more hollow fibers thus preferably forms the retentate section or the permeate section.

Alternative or in addition it can be provided that the infeed section, the retentate section and/or the permeate section are connected to one another via a fluidic connection. This simplifies the use of the filter module for tangential flow filtration.

In an embodiment of the filter module it is provided that the filter module, preferably the housing, comprises an infeed inlet for feeding the feed medium to be filtered into the filter module, a retentate outlet for discharging retentate from the filter module and/or a permeate outlet for discharging permeate from the filter module.

In addition, it can be provided that the infeed inlet is connected via a fluidic connection to the infeed section, the one or more hollow fibers and/or the one or more conduits. Alternative or in addition it can be provided that the retentate outlet is connected via a fluidic connection to the retentate section, the one or more hollow fibers and/or the one or more conduits. Alternative or in addition it can be provided that the permeate outlet is connected via a fluidic connection to the permeate section, the one or more conduits and/or the one or more hollow fibers. This simplifies the use of the filter module for tangential flow filtration.

Alternative or in addition it can be provided that the one or more hollow fibers are connected, preferably potted, to the housing adjacent to, preferably at, the infeed inlet, the retentate outlet and/or the permeate outlet. In this way a secure connection, which is fluid-tight and/or pressure-resistant with respect to the operating pressure, between the housing and the hollow fibers is provided. The filter module, preferably the housing, can comprise one or more end caps to which the hollow fibers are connected to, preferably potted to. Alternative or in addition at least one end, preferably at least two ends, of the one or more hollow fibers are connected, preferably potted, to the housing and/or the end caps. The one or more end caps can simplify that the hollow fibers protruding outwards from the housing can be cut off flush at the end of the end caps. A flush surface is important to achieve a good and tight connection to the device of the system described further below, preferably to a seal, for example an O-ring, of the device. The one or more end caps can be made at least in sections from an adhesive, however, other materials are also conceivable. Alternatively or in addition the one or more hollow fibers can be connected to the housing by clamping and/or by adhesive bonding, preferably without the use of one or more end caps.

Alternative or in addition it can be provided that the infeed inlet, the retentate outlet and/or the permeate outlet are arranged on the same side of the housing or on different sides of the housing. In this way the inlets and outlets can be adapted for the device intended for using the respective filter module and in particular the inlets and outlets can be arranged to match the position of the inlets and outlets of the device intended for using the respective filter module. Preferably all inlets and/or outlets, in particular the infeed inlet, the retentate outlet and/or the permeate outlet, are arranged on the same side of the housing, preferably on the same sidewall of the housing, for example the same end wall of the housing.

System, preferably for use in a pharmaceutical process, comprising one or more filter modules, a device, preferably for use in a pharmaceutical process, wherein, preferably, the one or more filter modules are connected to the device via a respective fluidic connection, characterized in that the one or more filter modules are one or more filter modules according to one of claims 1 to 12. By using respective filter modules, it can be dispensed with to use extension tubes or special adapters to connect the one or more filter modules and the device. The device preferably is a device intended for tangential flow filtration, preferably ultrafiltration and/or diafiltration. The device is for example a legacy device, i.e. a device which was designed before the filter module of the present disclosure was designed. The design of the filter module thus allows a simple connection of the filter to this legacy device without the need for extension tubes or special adapters, even though the device was not designed for a filter module having hollow fibers with the respective lengths or respective effective filtration area. The pharmaceutical process can for example be a concentration process, buffer exchange process, sterile filtration process, virus filtration process, prefiltration process, microfiltration process and/or cell clarification process. The device can comprise one or more feed medium conduits for conveying the feed medium, preferably connected to the one or more feed medium outlets described subsequently, one or more retentate conduits for conveying retentate, preferably connected to the one or more retentate inlets described subsequently, and/or one or more permeate conduits for conveying permeate, preferably connected to the one or more permeate inlets described subsequently. The device can also comprise a pressure generation device for generating a pressure, for example an operating pressure, preferably in the one or more feed medium conduits, the one or more feed medium outlets, the one or more retentate conduits, the one or more retentate inlets, the one or more permeate conduits and/or the one or more permeate inlets. The pressure generation device can comprise at least one pressurized container and/or at least one pump. Alternatively or in addition the device can comprise one or more containers for storing feed medium, permeate and/or retentate. The one or more containers can be connected, preferably via a fluidic connection, with the one or more feed medium conduits, the one or more feed medium outlets, the one or more retentate conduits, the one or more retentate inlets, the one or more permeate conduits and/or the one or more permeate inlets. The one or more containers can comprise at least one single-use bag and/or at least one reaction tube. The device can comprise one or more flow adjustment elements for adjusting the flow in the one or more feed medium conduits, the one or more feed medium outlets, the one or more retentate conduits, the one or more retentate inlets, the one or more permeate conduits and/or the one or more permeate inlets. The one or more flow adjustment elements can comprise at least one valve and/or at least one flow restrictor.

In an embodiment of the system it is provided that the one or more filter modules are received in one or more filter module receptacles of the device and in that, preferably, the one or more filter modules are surrounded at least in sections by the one or more filter module receptacles, and/or the shape of the housing of one or more of the filter modules corresponds at least in sections to the shape of one or more of the filter module receptacles. In this way the one or more filter modules can be securely mounted to the device. In addition, this also simplifies the operation of the system as such a design simplifies mounting the one or more filter modules with the proper alignment to the device. Moreover, the filter module receptacles can be formed at least in sections by a frame and/or housing of the device.

In an embodiment of the system it is provided that the device, preferably the one or more filter module receptacles, comprises one or more feed medium outlets for discharging the feed medium from the device, one or more retentate inlets for feeding the retentate to the device and/or one or more permeate inlets for feeding the permeate to the device. This simplifies the transfer of feed medium to be filtered, retentate and permeate between the filter modules and the device. The one or more feed medium outlets, the one or more retentate inlets and/or the one or more permeate inlets can respectively comprise, preferably at their respective point of connection with the one or more filter modules, at least one seal, for example an O-ring.

In an embodiment of the system it is provided that the infeed inlet of one or more of the filter modules is fluidly connected respectively to one or more of the feed medium outlets, the retentate outlet of one or more of the filter modules is fluidly connected respectively to one or more of the retentate inlets and/or the permeate outlet of one or more of the filter modules is fluidly connected respectively to one or more of the permeate inlets. This simplifies the transfer of feed medium to be filtered, retentate and permeate between the filter modules and the device.

Alternative or in addition it is provided that the infeed inlet of one or more of the filter modules adjoins, preferably contacts, in particular in a fluid-tight manner and/or pressure-resistant manner, respectively one or more of the feed medium outlets, the retentate outlet of one or more of the filter modules adjoins, preferably contacts, respectively one or more of the retentate inlets and/or permeate outlet of one or more of the filter modules adjoins, preferably contacts, respectively one or more of the permeate inlets. In this way a direct contact between the respective inlets and outlets is provided, thus extension tubes or special adapters to connect the filter modules and the device can preferably be dispensed with to provide the connection. This in turn simplifies the operation of the system, in particular reduces the time needed to mount the one or more filter modules to the device.

In an embodiment of the system it is provided that the distance between the infeed inlet to the, preferably associated, retentate outlet of one or more of the filter modules corresponds to the distance between one of the feed medium outlets and one of the retentate inlets, preferably the associated retentate inlet, in that the distance between the infeed inlet to the, preferably associated, permeate outlet of one or more of the filter modules corresponds to the distance between one of the feed medium outlets and one of the permeate inlets, preferably the associated permeate inlet, and/or in that the distance between the retentate outlet to the, preferably associated, permeate outlet of one or more of the filter modules corresponds to the distance between one of the retentate inlets and one of the permeate inlets, preferably the associated permeate inlet. In this way the respective inlets and outlets of the filter modules and the device are arranged in a matching position. This further simplifies the operation of the system, in particular reduces the time needed to mount the one or more filter modules to the device.

The method for operating one or more filter modules comprises the following step: a) Providing one or more filter modules according to one of claims 1 to 12 and a device, preferably providing a system according to one of claims 13 to 16. The respective filter modules allow for a connection to the device without using additional extension tubes or special adapters. Moreover, the shape, preferably the cassette-shaped housing, of the one or more filter modules allow the connection of the one or more filter modules according to one of claims 1 to 12 as well as filter modules of other types, for example with flat filters, having the same shape, in particular cassette-shaped housing, at will and without the need to modify the device. The device is preferably a device for use in a pharmaceutical process and/or as described in connection with claims 13 to 16.

The method also comprises the following step: b) Connecting the one or more filter modules to the device. The one or more filter modules and the device are preferably connected to one another via a respective fluidic connection. The fluidic connection allows for a transfer of retentate, permeate and/or feed medium between the one or more filter modules and the device.

The method also comprises the following step: c) Separating a feed medium into a retentate and a permeate with the one or more filter modules. The separating is preferably carried out by means of tangential flow filtration by the one or more filter modules.

The method can preferably also comprise the following step: d) Disconnecting the on one or more filter modules from the device. This allows used filter modules to be removed and replaced if necessary.

In an embodiment of the method it is provided that in step b) the one or more filter modules are connected to the device in a fluid-tight manner and/or pressure-resistant manner. In this way providing a secure connection between the one or more filter modules and the device is simplified.

Alternatively or in addition it is provided that in step b) the one or more filter modules are pressed against the device to provide the connection. This simplifies the provision of a fluid-tight and/or pressure-resistant connection.

In an embodiment of the method it is provided that in step b) the respective infeed inlet of the one or more filter modules is connected via a direct contact to the respective one or more feed medium outlets of the device, in that in step b) the respective retentate outlet of the one or more filter modules is connected via a direct contact to the respective one or more retentate inlets of the device and/or in that in step b) the respective permeate outlet of one or more of the filter modules is connected via a direct contact to the respective one or more permeate inlets of the device. The direct connection is established without using additional extension tubes or special adapters, thus allowing for an easy and quick connection of the filter modules and the device without a need for modifying the filter modules or the device.

After step b) and/or before step d) it is preferably provided that the distance between the infeed inlet to the, preferably associated, retentate outlet of one or more of the filter modules corresponds to the distance between one of the feed medium outlets and one of the retentate inlets, preferably the associated retentate inlet, that the distance between the infeed inlet to the, preferably associated, permeate outlet of one or more of the filter modules corresponds to the distance between one of the feed medium outlets and one of the permeate inlets, preferably the associated permeate inlet, and/or that the distance between the retentate outlet to the, preferably associated, permeate outlet of one or more of the filter modules corresponds to the distance between one of the retentate inlets and one of the permeate inlets, preferably the associated permeate inlet.

Further features and advantages of the filter module, the system and the method emerge from the following description of exemplary embodiments where reference is made to the attached drawing.

In the drawing
- Fig. 1a: shows a first exemplary embodiment of a filter module for the tangential flow filtration of a feed medium in a perspective view,
- Fig. 1b: shows the filter module of Fig. 1a with one housing part removed in a perspective view,
- Fig. 1c: shows the filter module of Fig. 1b with end caps in a side view,
- Fig. 1d: shows the filter module of Fig. 1c in a sectional view,
- Fig. 2: shows a second exemplary embodiment of a filter module for the tangential flow filtration of a feed medium with one housing part omitted in a perspective view,
- Fig. 3a: shows a third exemplary embodiment of a filter module for the tangential flow filtration of a feed medium in a side view,
- Fig. 3b: shows the filter module of Fig. 3a in a sectional view,
- Fig. 4: shows a fourth exemplary embodiment of a filter module for the tangential flow filtration of a feed medium with one housing part omitted in a side view,
- Fig. 5: shows a fifth exemplary embodiment of a filter module for the tangential flow filtration of a feed medium with one housing part omitted in a side view,
- Fig. 6a: shows a section of a system, preferably for use in a pharmaceutical process, in a side view, and.
- Fig. 6b: shows a sectional view of the system of Fig. 6a.

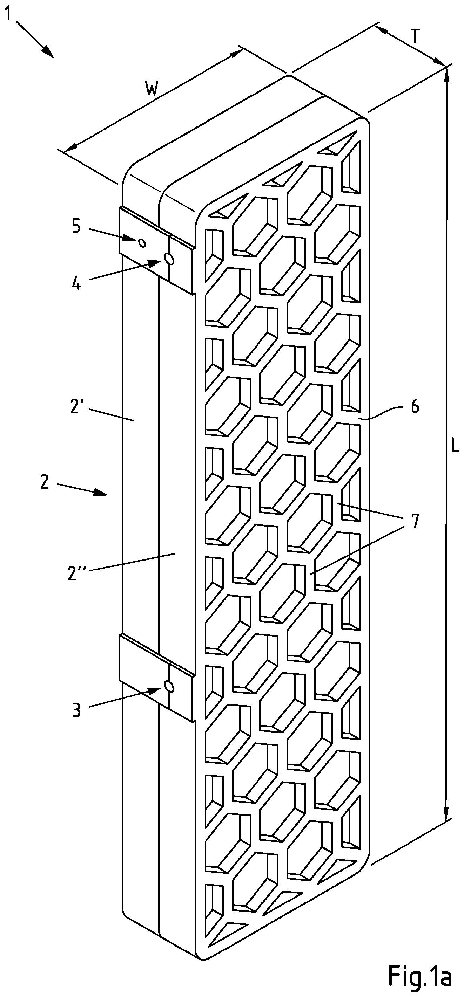

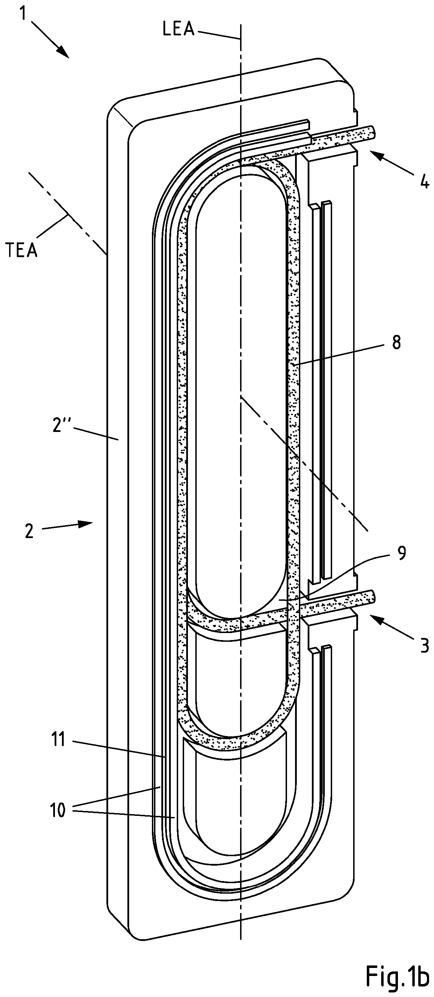

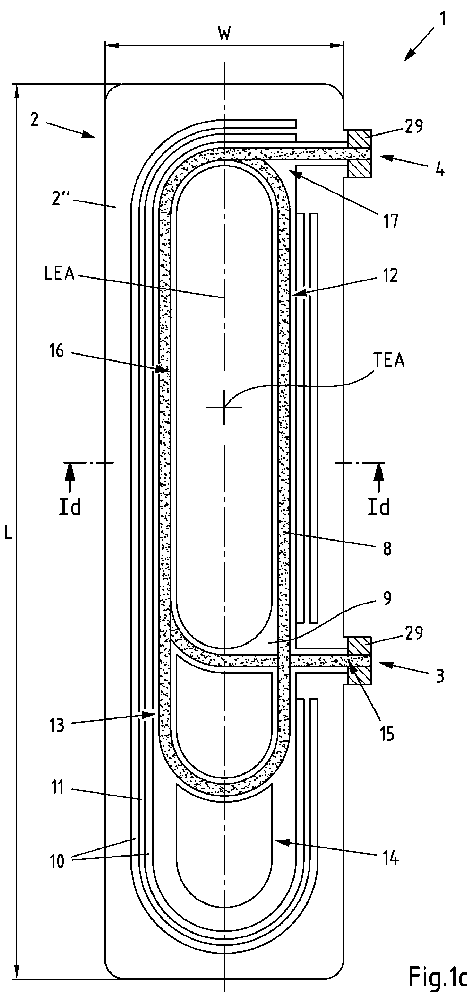

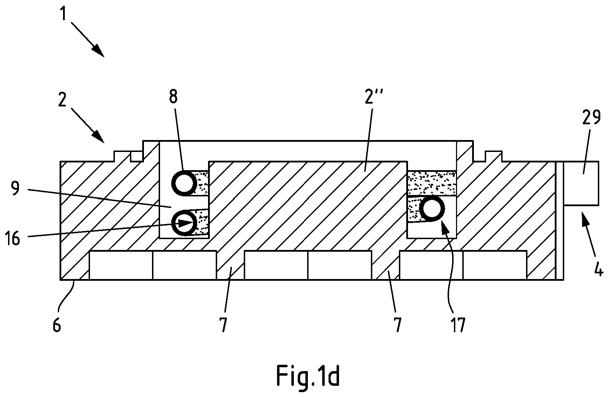

Fig. 1 shows a first exemplary embodiment of a filter module 1 for the tangential flow filtration of a feed medium in a perspective view.

The filter module 1 comprises a housing 2, which has in the shown embodiment two main housing parts 2', 2" connected to each other. This connection is in particular provided by gluing the two housing parts 2', 2" together, however, other connection methods and types, for example thermal welding, are also conceivable. The housing 2 of the shown embodiment is cassette shaped and has a length L which is several times larger than the width W and thickness T of the housing 2.

In order to feed or discharge medium to and from the filter module 1, the filter module 1 comprises an infeed inlet 3 for feeding a feed medium to be filtered into the filter module 1, a retentate outlet 4 for discharging retentate from the filter module 1 and a permeate outlet 5 for discharging permeate from the filter module 1. At least sections of the infeed inlet 3, the retentate outlet 4 and the permeate outlet 5 are formed by the housing 2, however, there can also be provided end caps (as will be shown in Fig. 1c) which can alternative or in addition at least in sections form the infeed inlet 3, the retentate outlet 4 and the permeate outlet 5. In the shown embodiment the infeed inlet 3, the retentate outlet 4 and the permeate outlet 5 are all arranged on the same side of the housing 2, however, other configurations are also possible.

In the shown embodiment two opposing outer surfaces 6 of the housing 2 (only one of the surfaces 6 can be seen in Fig. 1a) comprise honeycomb-like struts 7 for improving the rigidity of the housing 2.

Fig. 1b shows the filter module 1 of Fig. 1a with one housing part 2' removed in a perspective view. Due to the removal of the housing part 2' the inside of the filter module 1 can be seen in detail.

The filter module 1 comprises a hollow fiber 8 for separating a feed medium into a retentate and a permeate. However, it is also conceivable that the filter module 1 comprises a plurality of hollow fibers 8. The hollow fiber 8 is arranged in the housing 2 in a conduit 9, wherein the conduit 9 is arranged in the housing 2. In the shown embodiment the conduit 9 is formed by the housing 2 itself, in particular by sidewalls of the housing 2. The conduit 9 is formed at least in sections by recesses in the shown housing part 2", however, the other housing part 2' as well comprises respective recesses forming at least in sections the conduit 9, in particular providing a fluidic connection to the permeate outlet 5.

In the shown embodiment the hollow fiber 8 is substantially longer than the greatest extension of the housing 2, here the length L of the housing 2. In order to arrange the hollow fiber 8, which in the shown embodiment has a standardized length of 12 inch, in the housing 2 and at the same time allow for the infeed inlet 3, the retentate outlet 4 and the permeate outlet 5 to be arranged at desired positions, the hollow fiber 8 is bent around a transverse extension axis TEA of the housing 2. In the shown embodiment the hollow fiber 8 is bent with more than one complete loop around the transverse extension axis TEA. The transverse extension axis TEA extends perpendicularly to a longitudinal extension axis LEA of the housing 2. This longitudinal extension axis LEA in turn extends along the greatest extension of the housing 2, which in the shown embodiment is the length L of the housing 2. In order to accommodate the hollow fiber 8 securely and with minimal dead space the conduit 9 is also bent around the transverse extension axis TEA of the housing 2 thus forming several conduit sections, which will be described in more detail later on. The hollow fiber 8 as well as the conduit 9 are bent in the shown embodiment with a bending radius between at least 1 mm and at most 100 mm, thus ensuring a sufficiently large bending radius that reduces the shear forces on medium filtered in the filter module 1 while at the same time still allowing for a compact design of the filter module 1.

The housing 2 also comprises ridges 10 forming a groove 11 therebetween, which are in addition to the gluing of the housing parts 2', 2" used to connect the shown housing part 2" with the other housing part 2'.

Fig. 1c shows the filter module 1 of Fig. 1b with end caps 29 in a side view.

The end caps 29 are used to fix the hollow fiber 8 to the housing 2 respectively adjacent to the infeed inlet 3, the retentate outlet 4 and the permeate outlet 5. In order to provide this connection, the hollow fibers 8 are potted to the end caps 29. However, other ways of connecting the hollow fiber 8 are also conceivable.

The conduit 9 in the shown embodiment comprises a plurality of sections, here a first conduit section 12 with a first conduit length, a second conduit section 13 with a second conduit length and a third conduit section 14 with a third conduit length. The first conduit section 12 forms the shortest, in particular O-shaped, of the three loops formed by the conduit 9, the third conduit section 14 forms the longest, in particular O-shaped, of the three loops formed by the conduit 9 and the second conduit section 13 forms the intermediate, in particular O-shaped, loop of the three loops formed by the conduit 9. The conduit sections 12, 13, 14 are connected to one another via a fluidic connection, which allows for hollow fibers 8 with different length to be arranged in the filter module 1 without the need to rearrange the position of the infeed inlet 3, the retentate outlet 4 and the permeate outlet 5. In the shown embodiment the hollow fiber 8 is arranged at least in sections in the first outlet section 12 and the second outlet section 13 and one end of the third outlet section 14 is free from the hollow fiber 8. This end of the third outlet section 14 free from the hollow fiber 8 could also be filled with a filling element to reduce dead space. The first conduit section 12, the second conduit section 13 and third conduit section 14 each bend around the transverse extension axis TEA and each of the conduit sections 12, 13, 14 forms respectively a complete loop around the transverse extension axis TEA.

The filter module 1 also comprises an infeed section 15 for feeding the feed medium to be filtered into the filter module 1. In addition, the filter module 1 comprises a retentate section 16 for accommodating the retentate and a permeate section 17 for accommodating the permeate generated by filtering the feed medium. In the shown embodiment the retentate section 16 is delimited by the hollow fiber 8 and is formed in particular within the hollow fiber 8. The permeate section 17 is delimited by the conduit 9 and the hollow fiber 8 and thus encompasses the area formed between the hollow fiber 8 and the conduit 9, in particular the sidewall of the conduit 9. The three sections 15, 16, 17 are connected to one another via a fluidic connection, wherein in particular the retentate section 16 and the permeate section 17 are connected via the sidewall of the hollow fiber 8 which is permeable to fluids, in particular liquids.

In order to transfer a medium to these respective sections it is provided that the infeed inlet 3 is connected via a fluidic connection to the infeed section 15, the retentate outlet 4 is connected via a fluidic connection to the retentate section16 and the permeate outlet 5 is connected via a fluidic connection to the permeate section 17.

Fig. 1d shows the filter module of Fig. 1c in a sectional view.

Here it can be clearly seen that the hollow fiber 8 is arranged in a loop as the sections of the hollow fiber 8 belonging to different loops are arranged on top of each other. Moreover, one can clearly see that the hollow fiber 8 is hollow on the inside and is arranged within the conduit 9.

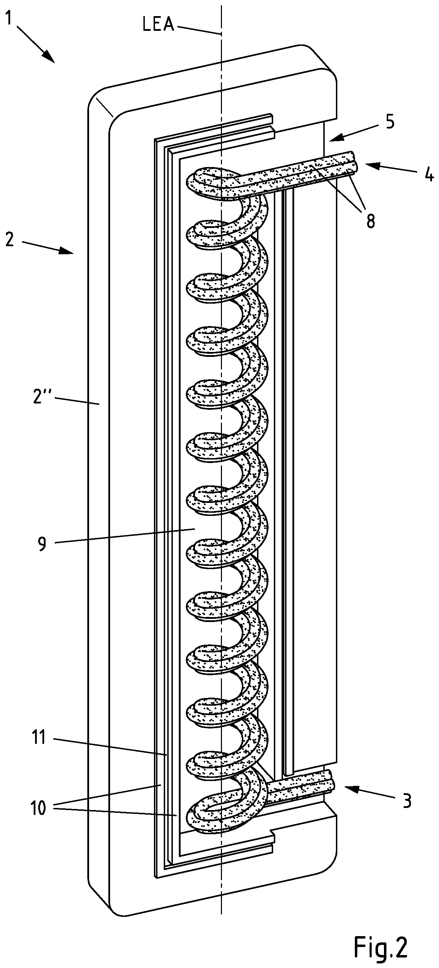

Fig. 2 shows a second exemplary embodiment of a filter module 1 for the tangential flow filtration of a feed medium with one housing part 2' omitted in a perspective view.

As the filter module 1 shown in Fig. 2 generally corresponds to the filter module 1 shown inf Fig. 1a, in the following same reference numbers are used for the same elements and in the following in particular the differences between the embodiments are described.

In the shown embodiment only one housing part 2" of the two main housings parts 2', 2" is shown. The filter module 1 of this embodiment comprises a plurality of hollow fibers 8 each bend around the longitudinal extension axis LEA of the housing 2 with several loops. In addition, the conduit 9 is formed predominantly straight, thus allowing for a simple construction of the housing 2 while at the same time allowing for the use of hollow fibers 8 which are longer than the largest extension of the housing 2. However, it could also be provided that the conduit 9 bents around the longitudinal extension axis LEA, preferably correspondingly to the hollow fiber 8.

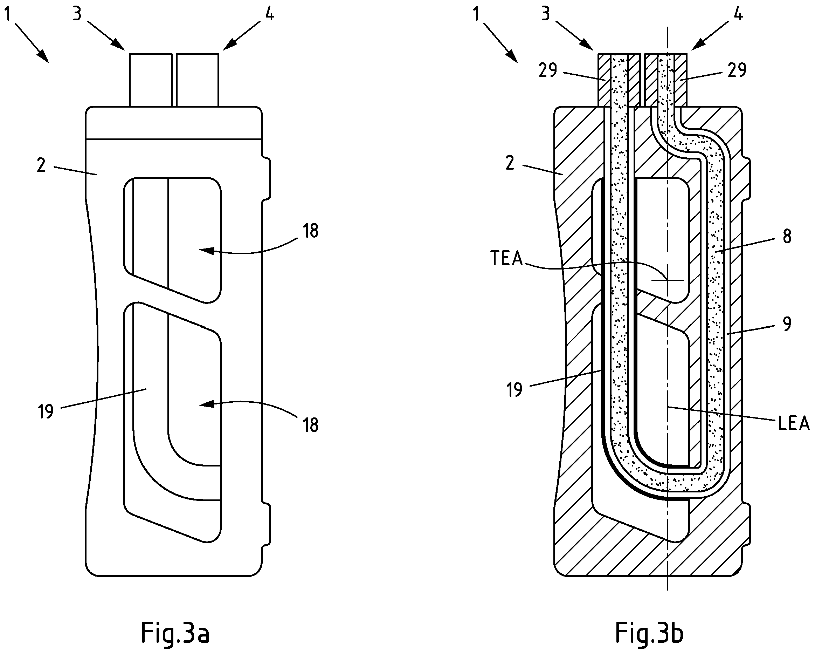

Fig. 3a shows a third exemplary embodiment of a filter module 1 for the tangential flow filtration of a feed medium in a side view.

As the filter module 1 shown in Fig. 3a generally corresponds to the filter module 1 shown inf Fig. 1a, in the following same reference numbers are used for the same elements and in the following in particular the differences between the embodiments are described.

In the shown embodiment the housing 2 comprises two through holes 18 extending from one side of the housing 2 to the opposite side of the housing 2. The through holes form at least 5 % and at most 95 % of the volume of the filter module 1. In this way the weight of the filter module 1, in particular of the housing 2, can be reduced. Moreover, a tube 19 is arranged and extends trough these through holes 18, wherein the conduit 9 is in sections formed by this tube 19. In this way the filter module 1 can be constructed in a simple way, even though the trough holes 18 lead to a more complex geometry of the housing. The tube 19 can for example be provided by molding the rest of the housing 2 around it or by arranging the tube 19 within the rest of the housing 2.

Fig. 3b shows the filter module of Fig. 3a in a sectional view.

Here the extension and arrangement of the tube 19 can be in particular seen. It can also be seen that the hollow fiber 8 as well as the conduit 9 are both bent around the transverse extension axis TEA.

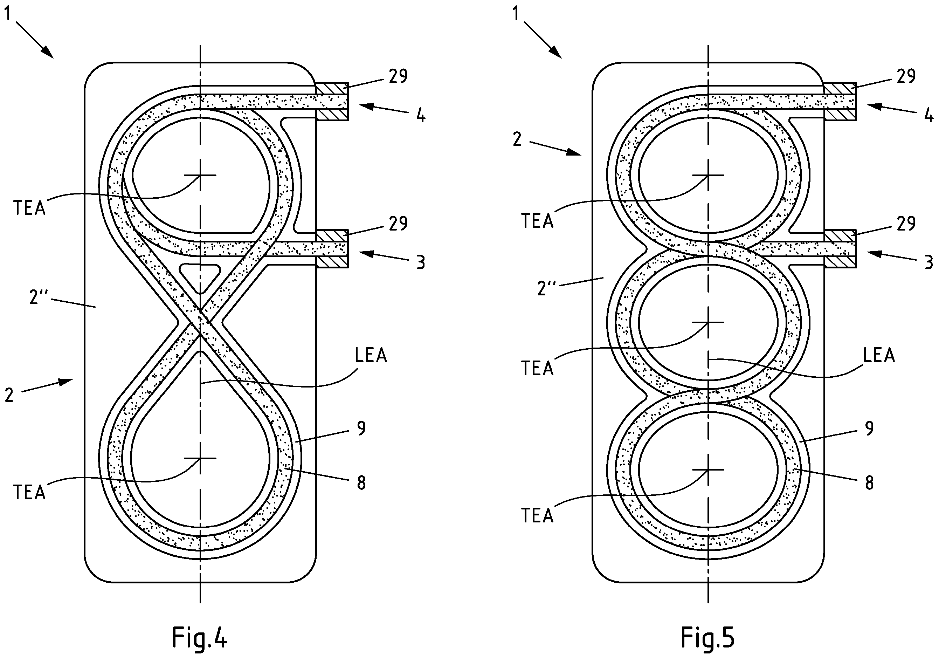

Fig. 4 shows a fourth exemplary embodiment of a filter module 1 for the tangential flow filtration of a feed medium with one housing part 2' omitted in a side view.

As the filter module 1 shown in Fig. 4 generally corresponds to the filter module 1 shown in Fig. 1a, in the following same reference numbers are used for the same elements and in the following in particular the differences between the embodiments are described.

In the shown embodiment the hollow fiber 8 as well as the conduit 9 are bent around two transverse extension axes TEA with at least one complete loop each, thereby forming an eight. In this way the flow of the medium in the filter module 1 simplifies it to prevent fouling of the hollow fiber 8 and sedimentation at the hollow fibers 8 and the conduit 9. Depending on the design of the housing 2, the respective axes TEA could also be the longitudinal extension axes LEA around which the hollow fiber 8 and the conduit 9 bent.

Fig. 5 shows a fifth exemplary embodiment of a filter module 1 for the tangential flow filtration of a feed medium with one housing part 2' omitted in a side view.

As the filter module 1 shown in Fig. 5 generally corresponds to the filter module 1 shown in Fig. 1a, in the following same reference numbers are used for the same elements and in the following in particular the differences between the embodiments are described.

In the shown embodiment the hollow fiber 8 as well as the conduit 9 are bent around three transverse extension axes TEA with at least one complete loop each. In this way the flow of the medium in the filter module 1 simplifies it to prevent fouling of the hollow fiber 8 and sedimentation at the hollow fiber 8 and the conduit 9. In the shown embodiment the hollow fiber 8 are bent around the transverse extension axes TEA with three continuously curved loops, one loop around each of the transverse extension axes TEA. This further simplifies the prevention of fouling and sedimentation. Depending on the design of the housing 2, the respective axes TEA could also be the longitudinal extension axes LEA around which the hollow fiber 8 and the conduit 9 bent.

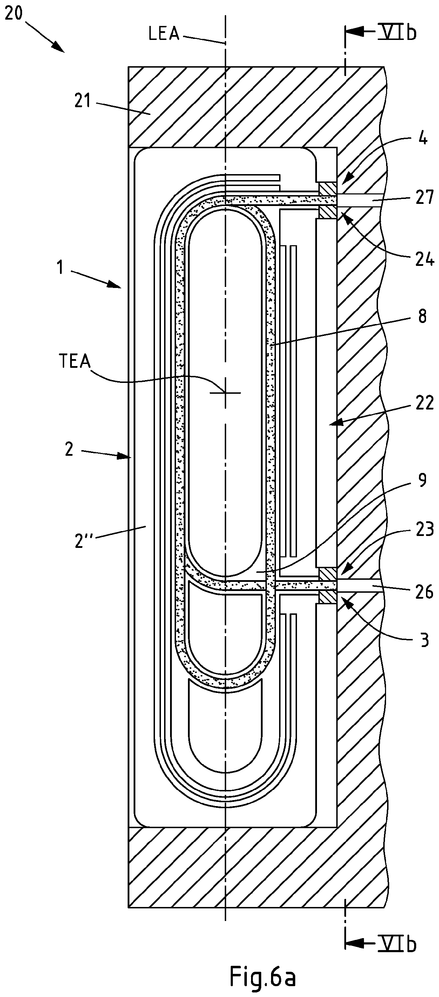

Fig. 6a shows a section of a system 20, preferably for use in a pharmaceutical process, in a side view.

In the shown embodiment the system 20 comprises at least one filter module 1 as shown in Fig. 1c and a device 21, for example a screening device. The filter module 1 is connected to the device 21 via fluidic connections.

The filter module 1 is received in a filter module receptacle 22 of the device 21, which surrounds the filter module 1 in sections. Other designs of the filter module receptacle 22, for example wherein the filter module receptacle 22 is formed by a frame only surrounding the filter module 1 at a small section of the housing 2 of the filter module 1 are also conceivable. The shape of the housing 2 of the filter module 1 corresponds in sections to the shape the filter module receptacles 22, allowing for an easy operation of the system 20, in particular an easy insertion of the filter module 1 into the filter module receptacle 22.

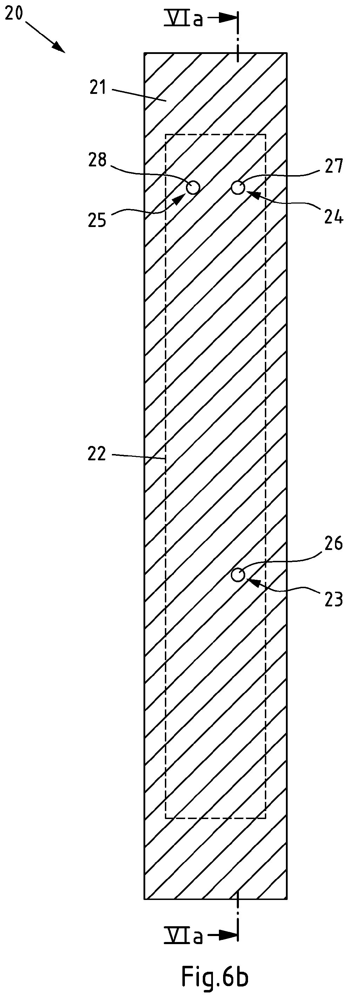

The device 21 comprises a feed medium outlet 23 for discharging the feed medium from the device 21 to the filter module 1, a retentate inlet 24 for feeding the retentate from the filter module 1 to the device 21 and a permeate inlet 25 for feeding the permeate from the filter module 1 to the device 21 (the permeate inlet 25 is shown in Fig. 6b). In order to transfer medium from the device 21 to the filter module 1 and vice versa the infeed inlet 3 of the filter module 1 is fluidly connected to the feed medium outlet 23, the retentate outlet 4 the filter module 1 is fluidly connected to the retentate inlet 24 and the permeate outlet 5 of the filter module 1 is fluidly connected to the permeate inlet 25. Moreover, the feed medium outlet 23 is part of a feed medium conduit 26, the retentate inlet 24 is part of a retentate conduit 27 and the permeate inlet 25 is part of a permeate conduit 28 (the permeate conduit 28 is shown in Fig. 6b).

Fig. 6b shows a sectional view of the system of Fig. 6a. Here the area of the filter module receptacle 22 can be seen in more detail.

Here the arrangement of the feed medium outlet 23, the retentate inlet 24 and the permeate inlet 25 can be seen. This arrangement corresponds to the arrangement of the infeed inlet 3, the retentate outlet 4 and the permeate outlet 5 of the filter module 1. In particular it is provided that in order to simplify the connection of the filter module 1 and the device 21 the distance between the infeed inlet 3 to the associated retentate outlet 4 of the filter module 1 as shown in Fig. 1a corresponds to the distance between the feed medium outlet 23 and the associated retentate inlet 24 as shown in Fig. 6b, that the distance between the infeed inlet 3 to the associated permeate outlet 5 of the filter module 1 as shown in Fig. 1a corresponds to the distance between the feed medium outlet 23 and the associated permeate inlet 25 as shown in Fig. 6b and that the distance between the retentate outlet 4 to the associated permeate outlet 5 of the filter module 1 as shown in Fig. 1a corresponds to the distance between one of the retentate inlet 24 and the associated permeate inlet 25 as shown in Fig. 6b.

### Reference signs

- 1: Filter module
- 2: Housing
- 2', 2": housing part
- 3: Infeed inlet
- 4: Retentate outlet
- 5: Permeate outlet
- 6: Surface of the housing
- 7: Strut
- 8: Hollow fiber
- 9: Conduit
- 10: Ridge
- 11: Groove
- 12: First conduit section
- 13: Second conduit section
- 14: Third conduit section
- 15: Infeed section
- 16: Retentate section
- 17: Permeate section
- 18: Through hole
- 19: Tube
- 20: System
- 21: Device
- 22: Filter module receptacle
- 23: Feed medium outlet
- 24: Retentate inlet
- 25: Permeate inlet
- 26: Feed medium conduit
- 27: Retentate conduit
- 28: Permeate conduit
- 29: End cap
- L: Length
- LEA: Longitudinal extension axis
- T: Thickness
- TEA: Transverse extension axis
- W: Width

## Claims

1. Filter module (1) for the tangential flow filtration of a feed medium, comprising:
- a, preferably cassette-shaped, housing (2),
- one or more hollow fibers (8) for separating a feed medium into a retentate and a permeate,
- wherein the housing (2) has one or more transverse extension axes (TEA) and/or one or more longitudinal extension axes (LEA),
- wherein one or more conduits (9) are arranged in the housing (2),
- wherein the one or more hollow fibers (8) are arranged in the one or more conduits (9),
**characterized in that**
the one or more hollow fibers (8) are at least in sections bent around the one or more transverse extension axes (TEA) and/or the one or more hollow fibers (8) are at least in sections bent around the one or more longitudinal extension axes (LEA).

2. Filter module (1) according to claim 1,
**characterized in that**
- the one or more longitudinal extension axes (LEA) extend along the greatest extension of the housing (2) and/or
- **in that** the one or more transverse extension axes (TEA) extend obliquely, preferably perpendicularly, to the greatest extension of the housing (2) and/or to the one or more longitudinal extension axes (LEA).

3. Filter module (1) according to claim 1 or claim 2,
**characterized in that**
the one or more conduits (9) are at least in sections bent around the one or more transverse extension axes (TEA) and/or the one or more conduits (9) are at least in sections bent around the one or more longitudinal extension axes (LEA).

4. Filter module (1) according to one of claims 1 to 3,
**characterized in that**
- the one or more hollow fibers (8) and/or the one or more conduits (9) are bent around the one or more transverse extension axes (TEA) with at least one complete loop, preferably at least two complete loops, and/or
- **in that** the one or more hollow fibers (8) and/or the one or more conduits (9) are bent around the one or more longitudinal extension axes (LEA) with at least one complete loop, preferably at least two complete loops.

5. Filter module (1) according to one of claims 1 to 4,
**characterized in that**
- the one or more hollow fibers (8) and/or the one or more conduits (9) are bent around at least two, preferably at least three, of the one or more transverse extension axes (TEA), preferably with at least one complete loop each, in particular with at least two complete loops each, and/or
- **in that** the one or more hollow fibers (8) and/or the one or more conduits (9) are bent around at least two, preferably at least three, of the one or more longitudinal extension axes (LEA), preferably with at least one complete loop each, in particular with at least two complete loops each.

6. Filter module (1) according to one of claims 1 to 5,
**characterized in that**
the one or more hollow fibers (8) and/or the one or more conduits (9) are bent, preferably around the one or more transverse extension axes (TEA) and/or the one or more longitudinal extension axes (LEA), with at least one, preferably at least two, in particular at least three, predominantly continuously curved loop, preferably substantially completely continuously curved loop.

7. Filter module (1) according to one of claims 1 to 6,
**characterized in that**
the one or more hollow fibers (8) and/or the one or more conduits (9) are bent, preferably around the one or more transverse extension axes (TEA) and/or the one or more longitudinal extension axes (LEA), with a bending radius of at most 125 mm, preferably at most 100 mm, in particular at most 75 mm, and/or of at least 0,5 mm, preferably at least 1 mm, in particular at least 5 mm.

8. Filter module (1) according to one of claims 1 to 7,
**characterized in that**
the one or more conduits (9) form at least in sections, preferably substantially completely, a first conduit section (12) with a first conduit length, a second conduit section (13) with a second conduit length and/or a third conduit section (14) with a third conduit length, and **in that**
- the first conduit section (12), the second conduit section (13) and/or the third conduit section (14) bends at least in sections, preferably around the one or more transverse extension axes (TEA) and/or the one or more longitudinal extension axes (LEA),
- the first conduit section (12), the second conduit section (13) and/or the third conduit section (14) forms at least one complete loop, preferably around the one or more transverse extension axes (TEA) and/or the one or more longitudinal extension axes (LEA),
- the first conduit section (12) forms at least in sections the second conduit section (13) and/or the first conduit section (12) and/or the second conduit (13) section forms at least in sections the third conduit section (14),
- the first conduit length is shorter than the second conduit length and/or the third conduit length, the second conduit length is longer than the first conduit length and/or shorter than the third conduit length and/or the third conduit length is longer than the first conduit length and/or the second conduit length,
- the one or more hollow fibers (8) are arranged at least in sections in the first conduit section (12), the second conduit section (13) and/or the third conduit section (14), and/or
- the first conduit section (12), the second conduit section (13) and/or the third conduit section (14) are connected to one another via a fluidic connection.

9. Filter module (1) according to one of claims 1 to 8,
**characterized in that**
- the housing (2) comprises one or more through holes (18) extending through the housing (2), preferably from one side to another, in particular opposite, side of the housing (2), and, preferably, the one or more conduits (9) are arranged at least in sections in the one or more through holes (18), and/or
- **in that** the one or more conduits (9) are formed at least in sections by one or more tubes (19) and, preferably, the one or more tubes (19) are arranged at least in sections in the one or more through holes (18).

10. Filter module (1) according to claim 9,
**characterized in that**
the one or more through holes (18) form at least 5 %, preferably at least 15 %, in particular at least 25 %, and/or at most 95 %, preferably at most 85 %, in particular at most 75 %, of the volume of the filter module (1) and/or the housing (2).

11. Filter module (1) according to one of claims 1 to 10,
**characterized in that**
the filter module (1) comprises an infeed section (15) for feeding the feed medium to be filtered into the filter module (1), a retentate section (16) for accommodating the retentate and/or a permeate section (17) for accommodating the permeate, and **in that**, preferably,
- the retentate section (16) and/or the permeate section (17) is at least in sections delimited by the one or more conduits (9) and/or the one or more hollow fibers (8), preferably formed between the one or more conduits (9) and the one or more hollow fibers (8),
- the retentate section (16) and/or the permeate section (17) is least in sections delimited by the one or more hollow fibers (8), preferably formed within the one or more hollow fibers (8), and/or
- the infeed section (15), the retentate section (16) and/or the permeate section (17) are connected to one another via a fluidic connection.

12. Filter module (1) according to one of claims 1 to 11,
**characterized in that**
the filter module (1), preferably the housing (2), comprises an infeed inlet (3) for feeding the feed medium to be filtered into the filter module (1), a retentate outlet (4) for discharging retentate from the filter module (1) and/or a permeate outlet (5) for discharging permeate from the filter module (1), and **in that**, preferably,
- the infeed inlet (3) is connected via a fluidic connection to the infeed section (15) and/or the one or more conduits (9),
- the retentate outlet (4) is connected via a fluidic connection to the retentate section (16) and/or the one or more conduits (9),
- the permeate outlet (5) is connected via a fluidic connection to the permeate section (17) and/or the one or more hollow fibers (8),
- the one or more hollow fibers (8) are connected, preferably potted, to the housing (2) adjacent to, preferably at, the infeed inlet (3), the retentate outlet (4) and/or the permeate outlet (5), and/or
- the infeed inlet (3), the retentate outlet (4) and/or the permeate outlet (5) are arranged on the same side of the housing (2) or on different sides of the housing (2).

13. System (20), preferably for use in a pharmaceutical process, comprising
- one or more filter modules (1),
- a device (21), preferably for use in a pharmaceutical process,
- wherein, preferably, the one or more filter modules (1) are connected to the device (21) via a respective fluidic connection,
**characterized in that**
the one or more filter modules (1) are one or more filter modules (1) according to one of claims 1 to 12.

14. System (20) according to claim 13,
**characterized in that**
the one or more filter modules (1) are received in one or more filter module receptacles (22) of the device (21) and **in that**, preferably,
- the one or more filter modules (1) are surrounded at least in sections by the one or more filter module receptacles (22), and/or
- the shape of the housing (2) of one or more of the filter modules (1) corresponds at least in sections to the shape of one or more of the filter module receptacles (22).

15. System (20) according to claim 13 or claim 14,
**characterized in that**
the device (21), preferably the one or more filter module receptacles (22), comprises one or more feed medium outlets (23) for discharging the feed medium from the device (21), one or more retentate inlets (24) for feeding the retentate to the device (21) and/or one or more permeate inlets (25) for feeding the permeate to the device (21).

16. System (20) according to claim 15,
**characterized in that**
- the infeed inlet (3) of one or more of the filter modules (1) is fluidly connected respectively to one or more of the feed medium outlets (23), the retentate outlet (4) of one or more of the filter modules (1) is fluidly connected respectively to one or more of the retentate inlets (24) and/or the permeate outlet (5) of one or more of the filter modules (1) is fluidly connected respectively to one or more of the permeate inlets (25),
- **in that** the infeed inlet (3) of one or more of the filter modules (1) adjoins, preferably contacts, respectively one or more of the feed medium outlets (23), the retentate outlet (4) of one or more of the filter modules (1) adjoins, preferably contacts, respectively one or more of the retentate inlets (24) and/or permeate outlet (5) of one or more of the filter modules (1) adjoins, preferably contacts, respectively one or more of the permeate inlets (25),
- **in that** the distance between the infeed inlet (3) to the, preferably associated, retentate outlet (4) of one or more of the filter modules (1) corresponds to the distance between one of the feed medium outlets (23) and one of the retentate inlets (24), preferably the associated retentate inlet (24),
- **in that** the distance between the infeed inlet (3) to the, preferably associated, permeate outlet (5) of one or more of the filter modules (1) corresponds to the distance between one of the feed medium outlets (23) and one of the permeate inlets (25), preferably the associated permeate inlet (25), and/or
- **in that** the distance between the retentate outlet (4) to the, preferably associated, permeate outlet (5) of one or more of the filter modules (1) corresponds to the distance between one of the retentate inlets (24) and one of the permeate inlets (25), preferably the associated permeate inlet (25).

17. Method for operating one or more filter modules comprising the following steps:
a) Providing one or more filter modules (1) according to one of claims 1 to 12 and a device (21), preferably providing a system according to one of claims 13 to 16,
b) Connecting the one or more filter modules (1) to the device (21),
c) Separating a feed medium into a retentate and a permeate with the one or more filter modules (1), and
d) Preferably, disconnecting the on one or more filter modules (1) from the device (21).

18. Method according to claim 17,
**characterized in that**
- in step b) the one or more filter modules (1) are connected to the device (21) in a fluid-tight manner and/or pressure-resistant manner,
- **in that** in step b) the one or more filter modules (1) are pressed against the device (21) to provide the connection,
- **in that** in step b) the respective infeed inlet (3) of the one or more filter modules (1) is connected via a direct contact to the respective one or more feed medium outlets (23) of the device (21),
- **in that** in step b) the respective retentate outlet (4) of the one or more filter modules (1) is connected via a direct contact to the respective one or more retentate inlets (24) of the device (21), and/or
- **in that** in step b) the respective permeate outlet (5) of one or more of the filter modules (1) is connected via a direct contact to the respective one or more permeate inlets (25) of the device (21).
